# EUROPÄISCHE PATENTANMELDUNG

(11) **EP 0 590 499 A1**
(43) Veröffentlichungstag der Anmeldung: **06.04.1994**
(21) Anmeldenummer: 93115280.5
(22) Anmeldetag: 22.09.1993
(51) Int. Cl.: H04M 1/274

(54) **Mobiltelefon mit programmierbaren Tasten**

(30) Priorität: 01.10.1992 DE 4233065
(71) Anmelder: SIEMENS AKTIENGESELLSCHAFT, D-80333 München (DE)
(72) Erfinder: Christal, Philip, D-85646 Anzing (DE)

(57) **Zusammenfassung**

Es wird eine Einrichtung zum schnellen Wählen und Einspeichern beschrieben.

Diese Aufgabe wird gemäß der Erfindung gelöst durch Tasten (Softkeys) für eine Schnellwahl und im Display als Legenden erscheinende Textdarstellungen für den Benutzer.

Im Ruhezustand ist die Taste (Softkey) mit einem abstrakten Symbol, z.B. "..." bezeichnet. Wenn der Benutzer diese Taste drückt, wird er aufgefordert, die Schnellwahltaste zu programmieren. Diese führt ihn dann in einer lehrenden Art durch das Verfahren für die Eingabe sowohl der Nummer als auch des Namens. Das Verfahren bietet die Möglichkeit an, entweder vom Telefon-Adreßbuch zu übertragen oder eine neue Nummer bzw. Namen zu programmieren.

## Beschreibung

Die Erfindung bezieht sich auf ein Mobiltelefon mit einem Tastenfeld mit Wähl- und Funktionstasten und einem Anzeigefeld sowie mit ggf. im Bedienteil integrierten Sende-/Empfangseinrichtungen (Handheld).

Die vor längerer Zeit gebräuchlichen Telefone hatten wenig Probleme mit dem Mensch-Maschine-Interface; es war einfach: Wählen und Sprechen. Technologische Fortschritte haben eine beeindrukkende Menge von Merkmalen im Telefonwesen gebracht, z. B. das Memory zum Zweck einer effizienten Nutzung des Mobiltelefons. Die Benutzung dieser Merkmale ist meist sehr komplex, so daß ihre Anwendung nur selten in effektiver Weise erfolgt.

Dieses Problem nimmt zu, und mit der GSM-Technologie kommen viele neue und wertvolle Merkmale vom Netzwerk, Mobiltelefon und der verwendeten Chipkarte (SIM - Subscriber Identity Module). Die Benutzer dieser Technologie sind zunehmend weniger technisch versiert, ein Trend, der sich in dem Maß beschleunigt, wie diese Produkte den Verbrauchermarkt ansprechen. Ein weiteres Problem besteht darin, daß die erfahrenen Benutzer eine schnellere und effektivere Nutzung dieser Merkmale wollen, während die gelegentlichen oder Erstbenutzer eine schrittweise Führung/Belehrung benötigen.

Das gebräuchlichste Merkmal an Fernsprechprodukten ist heute die Speicherung von gewählten Nummern. Ohne spezielles Wissen des Funktionsablaufs kann das Merkmal nicht genutzt werden. Es ist klar, daß die Telefonbenutzung wesentlich einfacher würde, wenn ein individuelles, leicht zugängliches Telefonbuch verfügbar wäre. Das Problem ist jedoch immer das Benutzer-Interface.

Es existieren verschiedene Betriebsverfahren sowohl beim verdrahteten als auch beim mobilen Telefon. Alle verlangen vom Benutzer die neue Nummer einzugeben und normalerweise einen ein-oder zweistelligen Code hinzuzufügen, der dann zum Abruf benutzt ist. Das Hinzufügen eines Namens schließt generell eine komplexe Prozedur ein. In mobilen Fernsprechanlagen ist der Gebrauch von Tasten, mit STO (Store) und RCL (Recall) bezeichnet, die zum Speichern und Rückrufen gebraucht werden, allgemein ansteigend. Betriebsverfahren variiren und wie bei jeder anderen Lösung, ist das Studium einer Bedienungsanleitung wesentlich für den Gebrauch. Keine dieser Lösungen bietet eine Benutzerführung an, um eine neue Nummer zu speichern und ein persönliches Telefon-Adressbuch zu erstellen, das dem traditionell geschriebenen Adressbuch entspricht.

Bezüglich der Speicherung der Nummern sind verschiedene Lösungen versucht worden, von denen die effektivste eine vorgegebene Taste mit einer Bezeichnung darauf ist, auf welcher der Benutzer daneben den Namen von der eingegebenen Nummer schreiben kann. Dies ist jedoch sehr platzaufwendig, verhindert eine praktische Beschriftung auf den zunehmend kleiner werdenden Mobiltelefonen und sieht meist unordentlich aus. Das Einprogrammieren erfordert auf jeden Fall ein Studium der Bedienungsanleitung.

Der Erfindung liegt die Aufgabe zugrunde, für ein Mobiltelefon der eingangs beschriebenen Art eine einfache Lösung zum schnellen Wählen und zum Einspeichern zu schaffen.

Diese Aufgabe wird gemäß der Erfindung gelöst durch Tasten (Softkeys) für eine Schnellwahl und im Display als Legenden erscheinende Textdarstellungen für den Benutzer, indem mittels der Schnellwähltaste Nummer und Name eingegeben werden entweder durch Übertragung von einem Telefon-Adreßbuch oder durch Neuprogrammierung und nach Drücken einer Taste (Softkey) der Name für weitere schnelle Wählvorgänge ständig in der normalen Ruhestandsanzeige im Display angezeigt wird.

Ferner ist eine mit einem Anzeigefeld im Display kombinierte Taste (Softkey) zur Einspeicherung einer Rufnummer und gegebenenfalls des Namens vorgesehen in der Weise, daß nach Einge einer Rufnummer eine Anzeige "Speichern" auf dem Anzeigefeld des Display erscheint und der Benutzer durch die Betätigung des zugehörigen Softkeys die Rufnummer, evtl. um den Namen ergänzt, abspeichern kann.

Vorteilhafte Ausgestaltungen und Weiterbildungen des Erfindungsgegenstandes sind in den Ansprüchen 3 bis 7 angegeben.

Nachstehend wird die Erfindung anhand von in der Zeichnung dargestellten Ausführungsbeispielen näher erläutert.

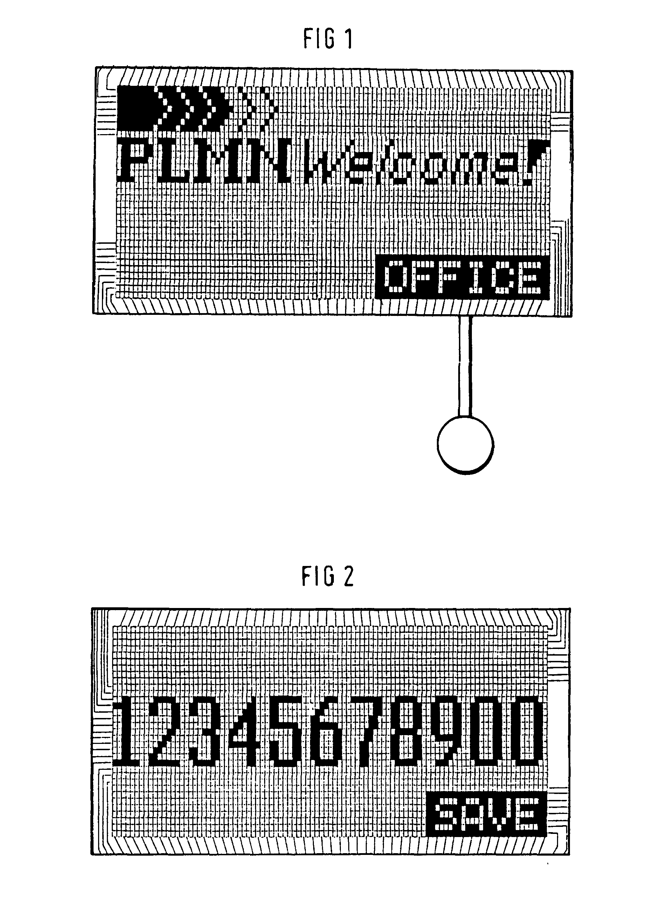

Fig. 1 zeigt ein Display für eine flexible graphische Gestaltung mit einer Vielzahl von Knotenpunkten (Pixels) aus sich kreuzenden waagerechten und senkrechten Leitungen, auf dem in einem kleinen Anzeigefeld als Legende für eine darunter gezeichnete Taste (Softkey) das Wort "Office" geschrieben ist als Hinweis für eine schnelle Wahlmöglichkeit beispielsweise zum Büro.

Der schnelle Wahlvorgang läuft wie folgt ab: Im Ruhezustand ist die Taste (Softkey) mit einem abstrakten Symbol, z.B. "..." bezeichnet. Wenn der Benutzer diese Taste drückt, wird er aufgefordert, die Schnellwahltaste zu programmieren. Diese führt ihn dann in einer lehrenden Art durch das Verfahren für die Eingabe sowohl der Nummer als auch des Namens. Das Verfahren bietet die Möglichkeit an, entweder vom Telefon-Adreßbuch zu übertragen oder eine neue Nummer bzw. Namen zu programmieren. Wird eine Setz-Taste gedrückt, so erscheint der Name ständig in der normalen Ruhestandsanzeige, bereit für nachfolgende schnelle Wählvorgänge.

Dieser Memory-Gebrauch ist sehr benutzerfreundlich und nützt die Möglichkeiten von dem LCD-Grafik-Display und den Softkeys aus. Unter Softkey wird dabei verstanden, daß Tasten unterhalb des Displays angeordnet sind, durch deren Betätigung die jeweils im Display darüber angezeigte Aktion ausgeführt wird. Zusätzlich zum Telefon-Adreßbuch, das Gegenstand einer parallelen Patentanmeldung ist, wird damit der Benutzer angehalten, bis zu zwei Schnellwahl-Nummern zu programmieren, mit den der dann mittels der Softkeys jeweils mit einem einzigen Tastendruck wählen kann. In einigen Fällen kann ein oder auch beide Tasten vom Betreiber für spezielle Dienstleistungen (z.B. Nachrichten) programmiert sein.

Fig. 2 zeigt ein entsprechendes Display mit einer Zahlenfolge, bei dem in einem kleineren Anzeigefeld das Wort "Save" für "Speichern" steht. Im folgenden wird die Vorgehensweise, die einen unerfahreren Benutzer durch einfache Schritte in die Lage versetzt, eine fehlerfreie Eingabe und Direktwahl vom Adreßbuch durchzuführen und ebenso einen erfahreren Benutzer bei der Durchführung des Verfahrens entlastet und für einen schnellen und sorgfältigen Ablauf sorgt, näher erläutert:
Wenn der Benutzer die dritte Stelle der Rufnummer eingibt, erkennt die Logik, daß dies keine Speichernummer ist und ändert die Softkeybezeichnung in "Save". Dies führt den Benutzer dahingehend, daß er die Taste drückt, nachdem die Nummer vervollständigt ist, um die Rufnummer zu speichern. Automatisch wird eine Speichernummer zugewiesen. Bei einer Verzögerung wird der Benutzer aufgefordert, den Namen hinzuzufügen. Wird dies bejaht, erfolgt eine weitere Anweisung, die die Eingabe über die alphanumerischen Tasten und den Abschluß des Namens betrifft. Die Nummer kann dann gewählt werden.

Innerhalb dieses Verfahrens besteht die Möglichkeit, die Speichernummer zu ändern und damit eine gegebenenfalls erforderliche Gruppierung zu unterstützen. Dafür steht ebenfalls das volle benutzergeführte Lehrsystem zur Verfügung. Das Verfahren kann ebenso verbunden werden mit einem Spracherkennungs-Adreßbuch. Falls dieses installiert ist, kann eine Nummer eingespeichert und abgerufen werden, und zwar in Form von Sprache, Namen oder Kurzrufnummer. Transfers zwischen den Speichern sind möglich. Eine mit einem Buch-Symbol bezeichnete Hardwaretaste (in der Figur nicht gezeichnet) wird benutzt für den Zugriff zum Telefon-Adreßbuch. Dies weist den Alpha-Mode den Nummerntasten zu, so daß beim Drücken einer Taste das Adreßbuch mit dem betreffenden Buchstaben erscheint. Das Adreßbuch kann ferner durch Rolltasten (Tasten mit Rollfunktion) abgefragt werden, wodurch ein Zugriff zum Namen- und Kurzrufnummernspeicher erreicht wird. Damit ist ein vielfältiger und zugleich einfacher Zugriff auf die gespeicherten Rufnummern möglich.

Durch die Ausbildung der Einrichtungen zum schnellen Wählen und Einspeichern als benutzergeführtes Lehrsystem ergibt sich eine einfache Handhabung, die die Verwendung einer Bedienungsanleitung überflüssig macht. Die Speicherung und Anzeige der Nachrichten ist in der jeweils gewünschten Sprache möglich.

## Patentansprüche

1. Mobiltelefon mit einem Tastenfeld mit Wähl-und Funktionstasten und einem Anzeigefeld sowie mit gegebenenfalls im Bedienteil integrierten Sende-/Empfangseinrichtungen (Handheld),
gekennzeichnet durch
Tasten (Softkeys) für eine Schnellwahl und im Display als Legenden erscheinende Textdarstellungen für den Benutzer, indem mittels der Schnellwahltaste Nummer und Name eingegeben werden entweder durch Übertragung von einem Telefon-Adreßbuch oder durch Neuprogrammierung und daß nach Drücken einer Taste (Softkey) der Name für weitere schnelle Wählvorgänge ständig in der normalen Ruhestandsanzeige angezeigt wird.

2. Mobiltelelefon mit einem Tastenfeld mit Wähl-und Funktionstasten und einem Anzeigefeld sowie mit gegebenenfalls im Bedienteil integrierten Sende-/Empfangseinrichtungen (Handheld),
gekennzeichnet durch
eine mit einem Anzeigefeld im Display kombinierte Taste (Softkey) zur Einspeicherung einer Rufnummer und gegebenenfalls des Namens in der Weise, daß nach Eingabe einer Rufnummer eine Anzeige "Speichern" auf dem Anzeigefeld des Display erscheint und der Benutzer durch Betätigung des zugehörigen Softkeys die Rufnummer, evtl. um den Namen ergänzt, abspeichern kann.

3. Mobiltelefon nach Anspruch 2,
dadurch gekennzeichnet,
daß nach vollständiger Eingabe der Rufnummer automatisch eine Speichernummer zugewiesen wird.

4. Mobiltelefon nach Anspruch 2 oder 3,
dadurch gekennzeichnet,
daß das Speicherverfahren mit einem Spracherkennungs-Adreßbuch kombinierbar ist derart, daß eine eingespeicherte Nummer in Sprache, Namen oder Kurzrufnummer abrufbar und von einem Mode in einen anderen übertragbar ist.

5. Mobilsystem nach einem der Ansprüche 2 bis 4,
gekennzeichnet durch
eine mit einem auf ein Adreßbuch hinweisenden Symbol versehene Taste (Harttaste) die dem Zugriff zum Telefon-Adreßbuch dient und eine Zuweisung vom Alpha-Mode zu den Nummerntasten vornimmt derart, daß durch Drükken einer Nummerntaste das Adreßbuch mit dem betreffenden Buchstaben erscheint.

6. Mobiltelefon nach Anspruch 5,
dadurch gekennzeichnet,
daß das Adreßbuch durch Rolltasten abfragbar ist zum Zugriff auf die Namen- und Codenummernspeicher.

7. Mobilsystem nach einem der vorhergehenden Ansprüche,
dadurch gekennzeichnet,
daß die Einrichtungen zum schnellen Wählen und Einspeichern als benutzergeführtes Lehrsystem ausgebildet sind.
